# EUROPÄISCHE PATENTANMELDUNG

(11) **EP 1 102 267 A2**
(43) Veröffentlichungstag der Anmeldung: **23.05.2001**
(21) Anmeldenummer: 00121117.6
(22) Anmeldetag: 28.09.2000
(51) Int. Cl.: G11B 23/40, G09F 3/00, B42D 15/10

(54) **Sicherungselement und Folie mit dielektrischer Schicht**

(30) Priorität: 19.10.1999 DE 29918435 U
(71) Anmelder: topac Multimedia Print GmbH, 33332 Gütersloh (DE)
(72) Erfinder: Schröder, Erhard, 32791 Lage (DE); Rosowski, Ralf, 33330 Gütersloh (DE)
(74) Vertreter: Schaumburg, Thoenes & Thurn

(57) **Zusammenfassung**

Die Erfindung betrifft eine Folie sowie ein Sicherungselement mit einer Beschichtung für den Schutz von auf einem Informationsträger (3) aufgebrachten, IR-lesbaren Informationen. Die Folie kann zum Schutz von Informationsträgern aller Art verwendet werden, um die dem Informationsträger aufgeprägte Information vor Zerstörung, Kopieren und Mißbrauch zu schützen. Die beschichtete Folie ist dabei für geeignete Lesegeräte, z.B. IR-Lesegeräte, durchlesbar ausgebildet, so daß die auf dem dahinter liegenden Informationsträger implementierte Information abgefragt werden kann. Ferner können in der Folie als Kopierschutz holografische Elemente integriert werden. Die Folie besitzt eine Beschichtung (2) mit folgender Struktur: Die Folie besteht aus einer transparenten Trägerbahn (1), die mit einer Beschichtung (2) aus einer oder mehreren definierten Schichten (2.1 - 2.4) eines dielektrischen Materials versehen ist. Die dielektrische Schicht (2.1) bzw. die Schichten (2.1 - 2.4) sind sowohl hinsichtlich der Materialwahl als auch ihre Schichtdicke derart aufeinander abgestimmt, daß ihre Reflexionsfähigkeit im sichtbaren Lichtbereich (VIS) über 70 % und im nahen Infrarotbereich (NIR) unter 20 % liegt, und daß ihre Lichtdurchlässigkeit (Transmission) im sichtbaren Lichtbereich (VIS) geringer als 20 % und im nahen Infrarotbereich (NIR) größer als 70 % ist.

## Beschreibung

Die Erfindung betrifft ein Sicherungselement mit einem Trägermaterial, und mit einer bildgebenden Schicht, die eine lichtbeugende Mikrostruktur trägt und bei Reflexion von Strahlung im sichtbaren Bereich ein Bild erzeugt. Ferner betrifft die Erfindung ein Produkt, welches mit dem Sicherungselement versehen ist. Weiterhin betrifft die Erfindung eine Folie mit einer Beschichtung für den Schutz von auf einem Informationsträger aufgebrachten, IR-lesbaren Informationen.

Herkömmliche Sicherungselemente enthalten eine lichtreflektierende oder spiegelnde Metallschicht, die mit einer strahlungsbeugenden Mikrostruktur, beispielsweise einer Hologrammstruktur, versehen werden kann. In Draufsicht auf das Sicherungselement gesehen entsteht bei der Reflexion an der Metallschicht, die im allgemeinen aus Aluminium besteht, ein Beugungsbild. Eine derartige Mikrostruktur ist relativ schwer herzustellen, da die notwendigen Prägewerkzeuge aufwendig und teuer sind. Auch läßt sich ein derartiges Prägewerkzeug nicht ohne weiteres nachbilden. Ein mit einer solchen Mikrostruktur versehenes Sicherungselement, beispielsweise in Etikettenform, wird im allgemeinen auf ein zu sicherndes Produkt aufgebracht. Ein derartig gesichertes Produkt kann nicht ohne weiteres von Produktpiraten nachgebaut werden, bzw. ein mit einem solchen Sicherungselement versehenes Produkt ist in einem hohen Maße fälschungssicher. An der Metallschicht wird das auffallende Licht reflektiert. Dies bedeutet, daß in Draufsicht gesehen Informationen auf darunterliegenden Schichten keine Bedeutung haben.

Es ist Aufgabe der Erfindung, ein Sicherungselement, ein Produkt und eine Folie anzugeben, das bzw. die eine hohe Sicherheit gegen Nachahmung und Fälschung bietet und das zusätzliche Auslesen von Informationen ermöglicht.

Diese Aufgabe wird für ein Sicherungselement durch die Merkmale des Anspruchs 1 gelöst. Vorteilhafte Weiterbildungen sind Gegenstand der abhängigen Ansprüche.

Gemäß der Erfindung wird als bildgebende Schicht, die beispielsweise ein Hobgrammbild erzeugt, eine dielektrische Schicht verwendet, die für Strahlung im Infrarotbereich durchlässig ist. Diese bildgebende Schicht hat eine lichtbeugende Mikrostruktur, welche bei der Reflexion von sichtbarem Licht durch optische Beugung ein visuell wahrnehmbares Bild rekonstruiert. Ein derartiges Sicherungselement gestattet es, daß einerseits die durch die Mikrostruktur bereitgestellte visuell kontrollierbare Sicherheit erhalten bleibt; andererseits können in Draufsicht gesehen unterhalb der bildgebenden Schicht in optischen Strukturen vorhandene Informationen ausgelesen werden, sofern sie Strahlung im Infrarotbereich reflektieren und/oder absorbieren. Die Information, die unterhalb der dielektrischen Schicht vorhanden ist, kann von einem Betrachter nicht ohne weiteres erkannt werden, da die dielektrische Schicht die Strahlung im sichtbaren Bereich reflektiert. Somit können unterhalb dieser dielektrischen Schicht verdeckt Informationen angeordnet werden. Diese Informationen erhöhen die Sicherheit gegen Fälschung und Nachahmung.

Gemäß einem weiteren Aspekt der Erfindung werden Produkte beansprucht, die mit einem derartigen Sicherungselement versehen sind. Beispielsweise kann das Sicherungselement als Etikett auf das Produkt aufgeklebt oder heißgesiegelt sein oder mit dem Produkt auf andere Weise verbunden sein. Eine weitere Variante besteht darin, daß das Sicherungselement in einem Heißklebeverfahren mit dem Produkt verbunden wird. In diesem Falle ist eine Schicht aus Heißsiegelkleber vorgesehen, die als Lösung oder Dispersion entweder auf dem Sicherungselement oder auf dem Produkt aufgetragen ist. Die getrocknete Schicht schmilzt bei der Siegelung in der Wärme und bildet dann eine Klebeverbindung. Das Heißsiegelverfahren verwendet hohe Drücke und Wärme, um die Klebeverbindung herzustellen. Das Sicherungselement wird auf diese Weise eng und dauerhaft mit dem Produkt verbunden, so daß nur unter Zerstörung der Mikrostruktur die Schichten des Sicherungselements aufgeschlossen werden können.

Die Erfindung betrifft gemäß einem weiteren Aspekt eine Folie, die mit einer Beschichtung für den Schutz von auf einem Informationsträger aufgebrachten IR-lesbaren Information versehen ist. Die Folie kann zum Schutz von Informationsträgern aller Art verwendet werden, um die auf dem Informationsträger bzw. auf der Beschichtung aufgebrachte Information oder Codierung vor Zerstörung, Kopieren und Mißbrauch zu schützen. Die beschichtete Folie ist dabei für geeignete Lesegeräte, z.B. IR-Scanner, so ausgebildet, daß die dahinter liegende, von außen an sich nicht sichtbare Information abgefragt werden kann. Ferner können in der Folie als Kopierschutz holografische Elemente integriert werden.

Es ist verbreitet bekannt, Dokumente und Informationsträger ganz oder teilweise mit einer Folienschicht bzw. der transferierten Beschichtung zu versehen, um die auf den Dokumenten oder Informationsträgern aufgebrachten Daten zu schützen und/oder als Merkmal für Echtheit und Authentizität zu dienen. Dabei werden bislang Folien verwendet, die eine Beschichtung auf Metallbasis aufweisen. Diese bekannten Folien haben die Eigenschaft, daß sie im sichtbaren Lichtbereich entweder über eine hohe Reflexionsrate und über eine geringe IR-Transmission verfügen oder aber eine hohe IR-Transmission und dann aber nur eine geringe sichtbare Reflexion gestatten.

Typische Anwendungsfälle sind aus dem Bereich von Ausweis- und Identifikationssystemen, Kredit- und Debitkarten sowie Markenprodukt- und Artikelauszeichnungssystemen bekannt.

Der Nachteil der durch den bekannten Stand der Technik verwendeten Folien und Beschichtungen besteht insbesondere darin, daß z.B. Hologrammetiketten bzw. Prägehologramme nicht als Unikatschutz oder zur Individualkennzeichnung wirksam verwendet werden können.

Der Erfindung stellt sich somit das Problem, eine Folie mit einer neuartigen Beschichtung zu schaffen, die die Nachteile der nach dem Stand der Technik bekannten Folien und deren Beschichtung vermeidet.

Zur Lösung dieses Problems wird die in Anspruch 30 beschriebene Folie vorgeschlagen. Weitere Ausgestaltungen und Ausführungformen der Erfindung ergeben sich aus den nachfolgenden Unteransprüchen.

Die durch eine Folie nach der Erfindung erzielbaren Vorteile liegen darin, daß sie wegen ihrer hohen Brillianz als Reflektor/Spiegel und/oder auch zur Aufnahme von geprägten Mikro-Strukturen bzw. holografischen Darstellungen hervorragend geeignet ist und daß sie mittels geeigneter Lesegeräte problemlos durchlesen werden kann.

Die erfindungsgemäß ausgebildete Folie eignet sich deshalb hervorragend zum Kopierschutz von auf verschiedensten Trägersubstraten aufgebrachten IR-lesbaren Informationen. Es ist sowohl ein physischer Schutz als auch ein Schutz vor unerlaubtem Kopieren gewährleistet.

Das mit der vorliegenden Erfindung beschriebene Folienbeschichtungsprinzip und die damit realisierbare Verwendung verbinden erstmalig sehr hohe IR-Durchlässigkeit und brillante, sichtbare Reflexion in einem Produkt. Die Erkennbarkeit der auf dem Informationsträger zu schützenden Information wird dadurch erschwert und fast unmöglich gemacht, die IR-Lesbarkeit wird dagegen nicht beeinträchtigt.

Wenn gemäß einer Ausführungsvariante zwischen der Trägerbahn und der dielektrischen Schicht eine geeignete transparente Lacktrennschicht angeordnet wird, so ist es möglich, die erfindungsgemäß ausgewählte dielektrische Beschichtung in einem an sich bekannten Heißsiegelverfahren auf andere Informationsträger oder Dokumente zu übertragen, wobei dann die transparente Folie entfernbar ist.

Weitere Vorteile der erfindungsgemäßen Folie bestehen darin, daß die beschichtete Folie auf Objekte und Gegenstände der unterschiedlichsten Art auf nahezu alle denkbaren Materialien aufgebracht werden kann. Sie ist in einfacher Weise herstellbar und als preiswerte Handelsware für die verschiedensten Anwendungsfälle verfügbar.

Ferner wird durch die Erfindung der Vorteil erzielt, daß die Folie mit der Beschichtung einen sichtbaren Silber- oder Goldglanz aufweist und somit nicht von bekannten holografischen Folien zu unterscheiden ist. Dadurch läßt sich durch Verwendung geeigneter Codierungen auf der Rückseite der Beschichtung eine lückenlose Kontrolle vom Ursprungs- und Herstellungsort bis zum Dokumenten- bzw. Produktinhaber herstellen.

Ausführungsbeispiele der Erfindung sind rein schematisch dargestellt und werden im folgenden anhand der Zeichnung erläutert. Darin zeigt:
- Figur 1: ein Sicherungselement, bei dem die dielektrische Schicht unmittelbar auf eine Trägerschicht aufgebracht ist,
- Figur 2: ein Sicherungselement, bei dem zwischen dem Trägermaterial und der dielektrischen Schicht eine Schicht aus Prägelack angeordnet ist,
- Figur 3: ein Sicherungselement, welches in Draufsicht gesehen unterhalb der dielektrischen Schicht eine Schicht mit einer optischen Struktur hat,
- Figur 4: ein Sicherungselement nach Figur 3 mit einer Schicht aus Prägelack,
- Figur 5: ein Sicherungselement mit einer Klebeschicht zwischen der Schicht mit optischer Struktur und der dielektrischen Schicht,
- Figur 6: ein Sicherungselement nach Figur 5 mit Prägelack,
- Figur 7: ein Sicherungselement, bei dem auf dem zu sichernden Produkt die Schicht mit optischer Struktur angeordnet ist,
- Figur 8: das Beispiel nach Figur 7 mit einer Prägelackschicht,
- Figur 9: ein Sicherungselement mit einer Trennschicht,
- Figur 10: ein Sicherungselement, bei dem die dielektrische Schicht vor dem Prägen aufgebracht wird,
- Figur 11: das Sicherungselement nach Figur 10 nach dem Prägevorgang,
- Figur 12: das Sicherungselement nach Figur 9 mit einer Schicht mit optischer Struktur,
- Figur 13: ein Sicherungselement, bei dem die Schicht mit der optischen Struktur mittels einer Klebeschicht verbunden ist,
- Figur 14: ein Sicherungselement, das im Heißsiegelverfahren mit einem Produkt verbunden ist,
- Figur 15: ein Sicherungselement, bei dem die Schicht mit optischer Struktur auf dem zu sichernden Produkt angeordnet ist,
- Figur 16: in vergrößerter Darstellung den Aufbau der beschichteten Folie in Verbindung mit einem die zu schützende Information aufweisenden Informationsträger, und
- Figur 17: ein Diagramm des für die Erfindung wesentlichen Wellenlängenbereichs des Lichtspektrums mit einer eingezeichneten Transmissionskurve und Reflexionskurve für erfindungsgemäß verwendbare Beschichtungen.

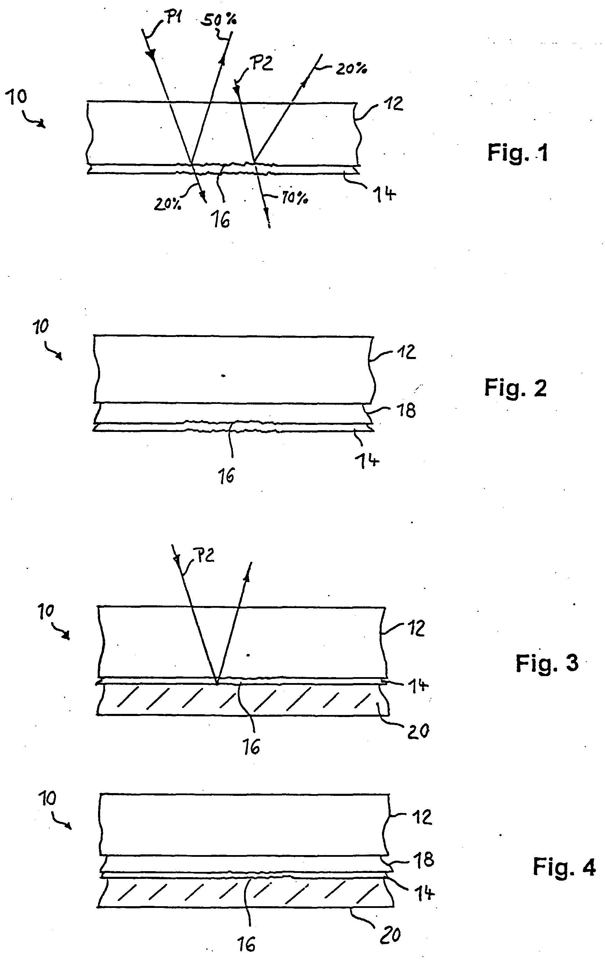

Figur 1 zeigt ein Sicherungselement, allgemein mit 10 bezeichnet, mit einem Trägermaterial 12, beispielsweise einer Schicht aus Polyäthylen oder Polypropylen. In die eine Seite des Trägermaterials 12 ist eine Mikrostruktur 16 mithilfe eines Prägestempels eingeprägt. Diese Mikrostruktur 16 ist beispielsweise eine Hobgrammstruktur, die ein weitgehend fälschungssicheres Bild erzeugt. Die Unterseite des Trägermaterials 12 mit der Mikrostruktur 16 ist in einem Aufdampfverfahren oder in einem Sputterverfahren mit einer dielektrischen Schicht 14 versehen. Diese dielektrische Schicht 14 besteht aus drei Teilschichten mit der Schichtfolge Si-Ti-O₂-Si. Die dielektrische Schicht 14 hat ein Reflexionsvermögen, welche sichtbare Strahlung zu mindestens 50% reflektiert, wohingegen die Strahlung im Bereich des nahen Infrarot höchstens zu 20% reflektiert wird. Für die Strahlungsdurchlässigkeit gilt, daß Strahlung im sichtbaren Bereich zu höchstens 20% und im Bereich des nahen Infrarot mindestens zu 70% durchgelassen wird. In Figur 1 wird dies anhand von Pfeilen veranschaulicht. Einfallendes Licht im sichtbaren Bereich ist mit P1 bezeichnet; einfallendes Licht im nahen Infrarotbereich ist mit P2 bezeichnet.

Figur 2 zeigt ein ähnliches Ausführungsbeispiel wie Figur 1, wobei für alle weitren Beispiele gilt, daß gleiche Teile gleich bezeichnet sind. Zwischen dem Trägermaterial 12 und der dielektrischen Schicht 14 ist eine Schicht aus Prägelack 18 angeordnet. Die Mikrostruktur 16 wird in diesen Prägelack 18 eingeprägt. Die dünne dielektrische Schicht 14 ebnet diese Mikrostruktur 16 nicht vollkommen ein, so daß auch die Unterseite die Mikrostruktur zeigt.

Figur 3 zeigt eine Weiterentwicklung des Sicherungselements nach Figur 1. Unterhalb der dielektrischen Schicht 14 ist eine Schicht 20 mit einer optischen Struktur angeordnet. Diese optische Struktur ist mithilfe von Strahlung P2 im nahen Infrarotbereich sichtbar. Diese Strahlung P2 wird von der dielektrischen Schicht 14 durchgelassen und an den optischen Strukturen der Schicht 20 reflektiert und/oder absorbiert. Diese optischen Strukturen sind dann von außen durch einen Infrarotdetektor erkennbar. Für Betrachter, die lediglich Strahlung im sichtbaren Bereich erfassen können, sind diese optischen Strukturen nicht ohne weiteres sichtbar, da die Strahlung im sichtbaren Bereich im wesentlichen bereits an der dielektrischen Struktur 14 reflektiert worden ist. Die optischen Strukturen der Schicht 20 sind also für sichtbare Strahlung durch die dielektrische Schicht 14 verdeckt.

Als optische Strukturen der Schicht 20 können beispielsweise ein binärer Strichcode oder andere Strukturen vorgesehen sein, die gegebenenfalls eine Vielzahl von digitalen Informationen umfassen können. Die Informationsmenge kann bis zu mehreren Megabyte betragen. Als optische Struktur kann auch eine Sicherheitsmarkierung vorgesehen sein. Ebenso ist es möglich, als optische Struktur ein Logo, einen lesbaren Text und/oder eine das Sicherungselement 10 oder eine das zu sichernde Produkt identifizierende Codierung zu verwenden. Gemäß Figur 3 ist die Schicht 20 mit der optischen Struktur unmittelbar mit der dielektrischen Schicht 14 verbunden. Beispielsweise können diese Schicht 20 oder die optischen Strukturen durch einen Drucker aufgebracht werden.

Figur 4 zeigt ein Ausführungsbeispiel nach Figur 3, wobei zwischen dem Trägermaterial 12 und der dielektrischen Schicht 14 ein transparenter Prägelack 18 angeordnet ist.

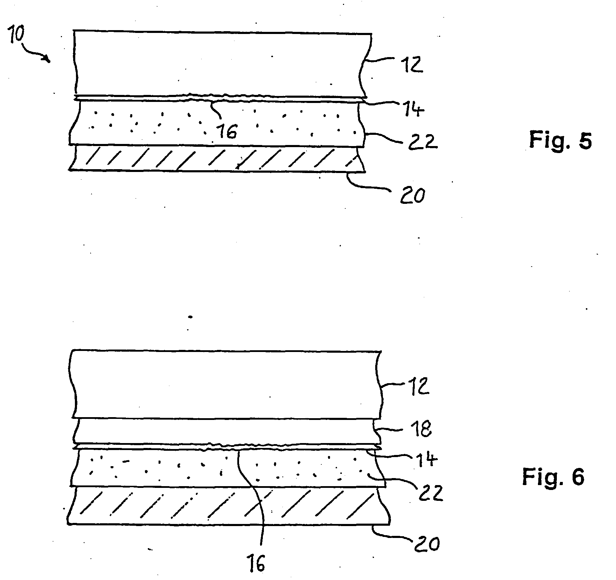

Figur 5 zeigt ein Sicherungselement 10, bei dem die Schicht 20 mit den optischen Strukturen mit einer Klebeschicht 22 mit der dielektrischen Schicht 14 verbunden ist. Diese Schicht 20 kann also separat hergestellt und dann mittels der Klebeschicht 22 mit der dielektrischen Schicht 14 verbunden werden.

Figur 6 zeigt eine Variante für das Beispiel nach Figur 5, wobei die Schicht 18 aus Prägelack zwischen dem Trägermaterial 12 und der dielektrischen Schicht 14 vorgesehen ist.

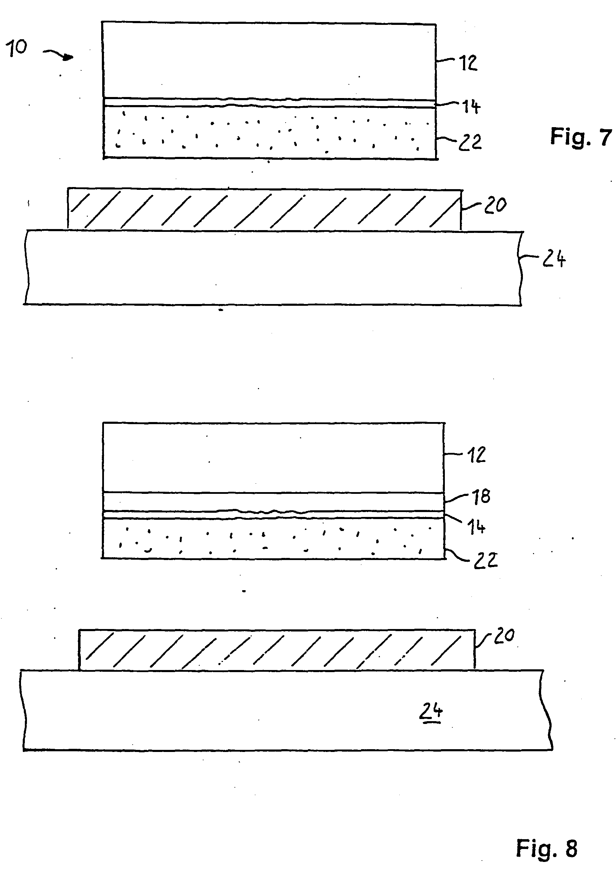

Figur 7 zeigt die Ausbildung des Sicherungselements 10 als Etikett, welches mit einem Produkt 24 zu verbinden ist. Das Produkt 24 trägt die Schicht 20 mit der optischen Struktur, beispielsweise einem Strichcode. Das Sicherungselement 10 wird mit seiner Klebeschicht 22 auf das Produkt 24 aufgebracht. In Draufsicht gesehen kann ein Betrachter den Strichcode auf der Schicht 20 nicht erkennen, jedoch kann dieser Strichcode von einem Infrarotdetektor maschinell ausgelesen werden. Der Strichcode kann beispielsweise mit Hilfe eines Thermodruckers auf die Schicht 20 aufgedruckt werden.

Figur 8 zeigt eine Variante zum Sicherungselement 10 nach Figur 7, wobei die Schicht 18 aus Prägelack vorhanden ist.

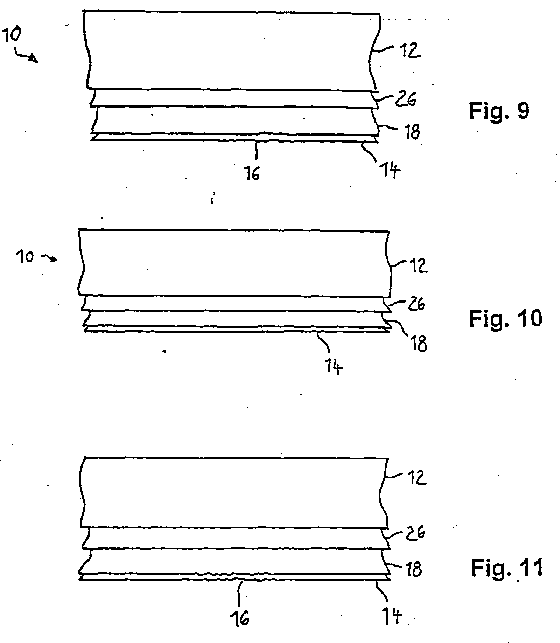

Die folgenden Figuren 9 bis 15 zeigen Sicherungselemente 10, die mit einer Trennschicht 26 versehen sind, In Figur 9 hat das Sicherungselement 10 die Trägerschicht 12, die über eine Trennschicht 26 mit der Schicht 18 aus Prägelack verbunden ist. Die Trennschicht enthält vorzugsweise Wachs oder Silikon. Sie gestattet ein Ablösen des Trägermaterials 12. Dieses Trägermaterial 12 muß daher nicht unbedingt wie bei den bisherigen Beispielen durchlässig für Strahlung im sichtbaren Bereich wie auch im Infrarotbereich sein. Lediglich die Trennschicht 26 und die Schicht 18 aus Prägelack muß für diese Strahlung durchlässig sein. Das am häufigsten verwendete Herstellverfahren läßt sich am Ausführungsbeispiel nach Figur 9 beschreiben. Zunächst wird mithilfe eines Prägestempels die Mikrostruktur 16 in die Schicht 18 aus Prägelack eingeprägt. Danach erst erfolgt das Aufbringen der dielektrischen Schicht 14 z.B. durch Aufdampfen oder Sputtern.

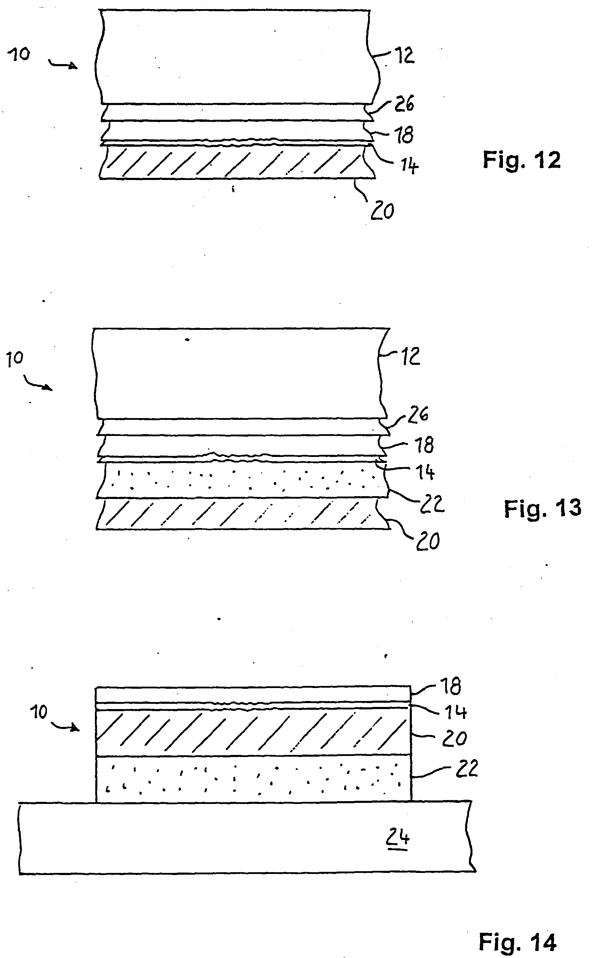

In Figur 10 wird beim Sicherungselement 10 mit gleichem Aufbau wie das nach Figur 9 zuerst auf den Prägelack 18 die dielektrische Schicht 14 aufgebracht. Erst danach wird, wie in Figur 11 gezeigt, mithilfe eines Prägestempels die Mikrostruktur 16 eingeprägt.

Figur 12 zeigt ein Sicherungselement 10, dessen Aufbau weitgehend mit dem nach Figur 11 übereinstimmt. An der Unterseite der dielektrischen Schicht 14 ist direkt die Schicht 20 mit optischen Strukturen angeordnet.

Figur 13 zeigt einen ähnlichen Aufbau, wobei zwischen der Schicht 20 mit optischen Strukturen und der dielektrischen Schicht 14 die Klebeschicht 22 angeordnet ist.

Figur 14 zeigt die Verbindung des Sicherungselements 10 mit dem Produkt 24, wobei sich die Schicht 20 direkt unterhalb der dielektrischen Schicht 14 befindet. Die Schicht 20 ist also über die Klebeschicht 22 mit dem Produkt 24 verbunden. Die Klebeschicht 22 besteht aus einem Heißsiegelkleber. Das Sicherungselement 10 wird in einem Heißsiegelklebeverfahren mit dem Produkt 24 unter Anwendung von Druck und Temperatur untrennbar verbunden. Anschließend wird die zunächst vorhandene Trägermaterialschicht 12 abgelöst. Da die weiteren Schichten 18 bis 22 relativ dünn sind, ist das Sicherungselement 10 nahezu plan mit der Oberfläche des Produktes 24.

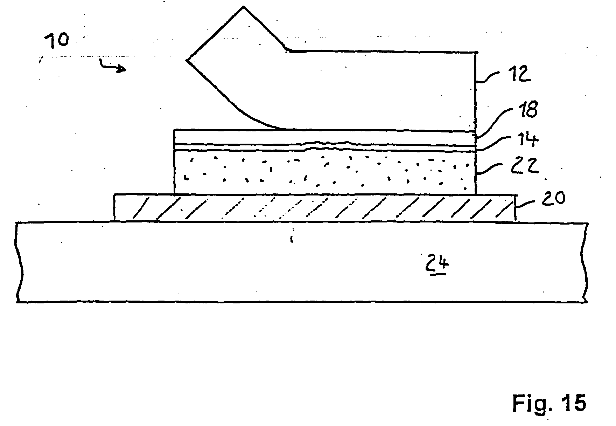

Figur 15 zeigt ein weiteres Ausführungsbeispiel für das Sicherungselement 10, welches mit dem Produkt 24 verbunden ist. Der Heißsiegelkleber der Klebeschicht 22 wird mit der Schicht 20 mit den optischen Strukturen im Heißsiegelklebeverfahren verbunden. Danach wird die Schicht aus Trägermaterial 12 abgezogen. Die Schicht 20, die beispielsweise einen Strichcode enthält, kann zuvor mit dem Produkt 24 untrennbar verbunden worden sein.

Die genannten Beispiele können auch untereinander kombiniert werden. Beispielsweise kann jeweils die dielektrische Schicht 14 vor dem Prägevorgang oder nach dem Prägevorgang aufgebracht werden. Als Produkt können beispielsweise die Verpackung von Gegenständen, die Produkte selbst, Compact-Discs, Kreditkarten, Ausweise, Datenträger etc. vorgesehen sein. Als weitere Variante kann vorgesehen sein, daß die optische Struktur in oder auf der Schicht 20 erst im nachhinein erzeugt wird, beispielsweise nachdem das Sicherungselement 10 mit dem Produkt 24 verbunden ist. Zum Beispiel kann zum Erzeugen dieser optischen Struktur ein Laser verwendet werden, dessen Strahlung im Infrarotbereich die dielektrische Schicht durchdringt und die optische Struktur einschreibt. Als Laser kann beispielsweise ein CO₂-Laser verwendet werden.

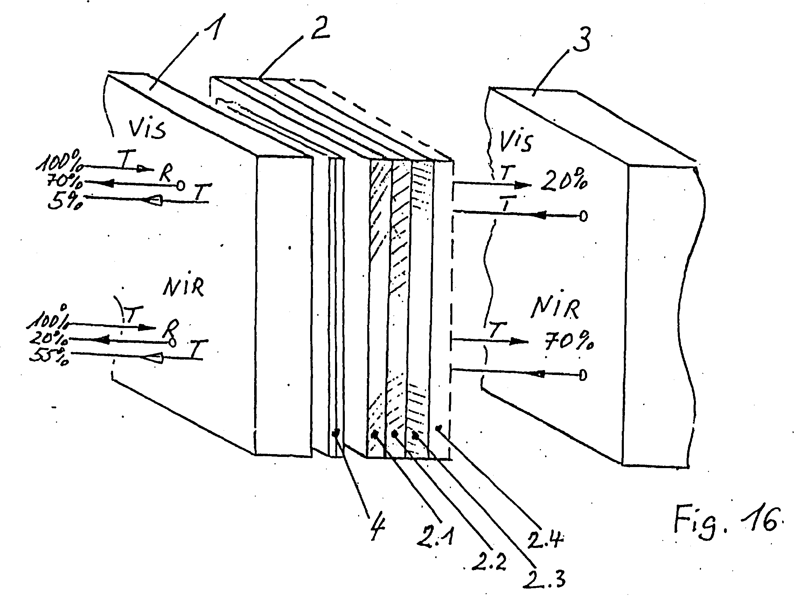

Der in Figur 16 schematisch skizzierte Aufbau der erfindungsgemäßen Folie stellt sich wie folgt dar:

Mit 1 ist eine transparente Trägerbahn, z.B. eine Folie aus bekannten Kunststoffmaterialien (PVC, PET Polycarbonat und dergl.), mit 2 ist eine mehrlagige dielektrische Beschichtung und mit 3 ist der eine IR-lesbare Information tragende Informationsträger bezeichnet. Die in der Figur 16 ebenfalls dargestellte Lacktrennschicht 4 kann fakultativ verwendet werden. Auf deren Funktion wird nachstehend noch näher eingegangen.

Zwischen der Trägerbahn 1 und der Beschichtung 2 ist als Kopierschutz ein hier nicht im einzelnen gezeigtes Hologramm angeordnet. Das Hologramm kann dabei auf der Rückseite der Trägerbahn 1 oder auf der zwischen Trägerbahn 1 und der ersten dielektrischen Schicht 2.1 vorgesehenen Lacktrennschicht 4 aufgeprägt sein.

Die dielektrische Beschichtung 2 kann einlagig oder mehrlagig mit mehreren Einzelschichten 2.1 - 2.4 ausgebildet sein. Dabei wird das zum Einsatz kommende Material und die applizierte Schichtdicke derart ausgewählt, daß die Reflexionsfähigkeit im sichtbaren Lichtbereich über 70 % und im nahen Infrarotbereich unter 20 % liegt. Ferner ist ihre Lichtdurchlässigkeit (Transmission) im sichtbaren Lichtbereich geringer als 20 % und im nahen Infrarotbereich größer als 70 %.

Als Materialien für die dielektrische Beschichtung 2 kommen vorzugsweise Silizium (Si) oder Titanoxid (TiO2) in Betracht. Die einzelnen Schichten 2.1 - 2.4 der Beschichtung 2 können aus gleichen oder unterschiedlichen Materialien bestehen.

Der Auftrag der dielektrischen Schichten 2.1 - 2.4 kann durch bekannte Bedampfungsverfahren u.a. durch Sputtern erfolgen.

Die Schichtdicke jeder Einzelschicht 2.1 - 2.4 beträgt vorzugsweise 15 bis 80 nm.

Insgesamt wird sich die dielektrische Beschichtung 2 vorteilhafterweise in einem Bereich zwischen 95 und 160 nm bewegen.

Die Funktionsweise der erfindungsgemäßen Folie wird nachstehend näher beschrieben: Bei der physikalischen Betrachtung des Lichtstrahls beim Durchtritt von festen Medien sind in der Regel zwar immer die drei Faktoren Reflexion, Transmission und Absorption zu beachten, die folgende Beschreibung beschränkt sich jedoch auf das Verhalten bezüglich Reflexion und Durchlässigkeitseigenschaften.

Wie in der Zeichnung Figur 16 durch den Pfeil R symbolisiert dargestellt, wird sich der auf die Folie in Richtung des Informationsträgers 3 gerichtete Lichtstrahl im sichtbaren Wellenlängenbereich VIS derart verhalten, daß er beim Eintritt in die beschichtete Folie infolge des hohen Reflexionsvermögens der Beschichtung 2 mit 70 % reflektiert wird. Demgegenüber verfügt die Beschichtungsanordnung für das Licht im sichtbaren Bereich lediglich über eine Transmission (Pfeil T), die maximal 20 % des Lichtstrahles auf dem Informationsträger 2 erreichen läßt. Aufgrund der rückwärts gerichteten Reflexion durch den Informationsträger 2 werden letztlich noch ca. 5 % des Lichtstrahles T wieder auf der Vorderseite der Folie austreten.

Für die Eigenschaften im nahen Infrarotbereich NIR des Lichtspektrums sind die Verhältnisse dagegen genau umgekehrt. Der mit 100 % einfallende Lichtstrahl T trifft aufgrund der hohen Transmissionsfähigkeit der Beschichtung 2 mit mindesten 70 % seiner Stärke auf den Informationsträger 3. Insgesamt werden nach der am Informationsträger 3 erfolgten Reflexion mindestens 55 % des Lichtstrahles nach der rückwärts gerichteten Transmission auf der Vorderseite wieder austreten. Aufgrund der geringen Reflexionsfähigkeit der Beschichtung 2 für den Wellenlängenbereich im nahen Infrarotbereich NIR werden dagegen lediglich 20 % des Lichtstrahles zur Vorderseite der Anordnung reflektiert.

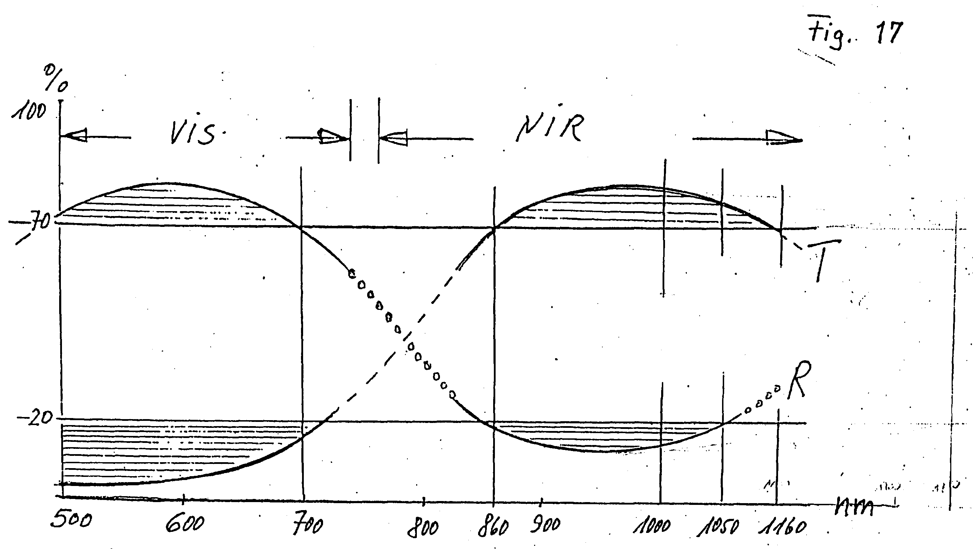

Wie in dem Diagramm der Figur 17 dargestellt ist, besteht das Wesen der Erfindung somit darin, Materialien für die Beschichtung der Folie auszuwählen, die im sichtbaren Wellenbereich VIS zwischen 500 und 750 nm Wellenlänge eine hohe Reflexionsfähigkeit R aufweisen, wohingegen im nahen Infrarotbereich NIR zwischen 750 und 1100 nm und bis 1250 nm die Reflexionsfähigkeit sehr gering ist und insbesondere unter mindestens 20 % liegt.

Dagegen verhalten sich die Transmissionswerte T durch die erfindungsgemäß aufeinander abgestimmte Beschichtung genau umgekehrt. Im sichtbaren Wellenbereich soll der einfallende Lichtstrahl sehr stark gedämpft werden und es sollen Transmissionswerte bis zu 20 % erzielt werden, wohingegen im nahen Infrarotbereich Werte bis fast 70 % anzustreben sind.

Bei einem Ausführungsbeispiel der Erfindung kann vorteilhaft vorgesehen werden, daß die Rückseite der dielektrischen Schicht 2 selbst als Informationsträger dient, wobei dieser Schicht durch entsprechende Verfahren eine codierte Information aufgeprägt werden kann.

Eine vorteilhafte Ausführungsform nach der Erfindung ergibt sich dadurch, daß man folgenden Schichtaufbau mit folgenden Materialien und Schichtdicken auwählt:
Erste Schicht: Silizium, 15 - 30 nm; zweite Schicht: Titanoxyd, 50 - 80 nm; dritte Schicht: Silizium, 30 - 50 nm.

Bei der in Figur 16 dargestellten Variante erfüllt die transparente Lacktrennschicht 4 die folgende Funktion:

Wenn die beschichtete Folie auf einen Informationsträger 3 durch Heißkleben aufgebracht wird, kann nach dem Auftrag die Trägerbahn 1 entfallen und die Lackschicht 4 bildet die Oberschicht der Beschichtung 2. Damit kann in einfacher Weise die dielektrische Schicht 2 auf die verschiedensten Objekte transferiert werden.

## Patentansprüche

1. Sicherungselement (10),
mit einem Trägermaterial (12),
und mit einer bildgebenden Schicht (14), die eine lichtbeugende Mikrostruktur (16) hat und bei Reflexion von Strahlung im sichtbaren Bereich ein Bild erzeugt,
wobei die bildgebende Schicht als dielektrische Schicht (14) ausgebildet ist, die Strahlung im sichtbaren Bereich reflektiert und für Strahlung im Infrarotbereich durchlässig ist.

2. Sicherungselement nach Anspruch 1, dadurch **gekennzeichnet**, daß das Trägermaterial (12) sowohl für Strahlung im sichtbaren Bereich als auch für Strahlung im Infrarotbereich durchlässig ist.

3. Sicherungselement nach Anspruch 1 oder 2, dadurch **gekennzeichnet**, daß als Trägermaterial (12) eine thermoplastische Schicht, vorzugsweise aus Polyäthylen oder Polypropylen verwendet wird.

4. Sicherungselement nach einem der vorhergehenden Ansprüche, dadurch **gekennzeichnet**, daß die dielektrische Schicht (14) unmittelbar auf dem Trägermaterial (12) aufgebracht ist (Figur 1).

5. Sicherungselement nach einem der vorhergehenden Ansprüche, dadurch **gekennzeichnet**, daß zwischen Trägermaterial (12) und dielektrischer Schicht eine Schicht aus Prägelack (18) angeordnet ist (Figur 2).

6. Sicherungselement nach einem der vorhergehenden Ansprüche, dadurch **gekennzeichnet**, daß in Draufsicht gesehen unterhalb der dielektrischen Schicht (14) eine Schicht (20) mit einer optischen Struktur angeordnet ist, die Strahlung im Infrarotbereich reflektiert.

7. Sicherungselement nach Anspruch 6, dadurch **gekennzeichnet**, daß die optische Struktur einen binären Code, vorzugsweise einen binären Strichcode enthält.

8. Sicherungselement nach Anspruch 6 oder 7, dadurch **gekennzeichnet**, daß die optische Struktur eine Sicherheitsmarkierung enthält.

9. Sicherungselement nach einem der vorhergehenden Ansprüche, dadurch **gekennzeichnet**, daß die optische Struktur ein Bildmotiv, ein Logo, einen lesbaren Text und/oder eine das Sicherungselement oder eine das zu sichernde Produkt identifizierende Codierung enthält.

10. Sicherungselement nach einem der vorhergehenden Ansprüche, dadurch **gekennzeichnet**, daß die Schicht mit der optischen Struktur unmittelbar mit der dielektrischen Schicht (14) verbunden ist (Figuren 3 und 4):

11. Sicherungselement nach einem der vorhergehenden Ansprüche 1 bis 10, dadurch **gekennzeichnet**, daß zwischen der Schicht (20) mit der optischen Struktur und der dielektrischen Schicht (14) eine Klebeschicht (22) angeordnet ist (Figuren 5 und 6).

12. Sicherungselement nach einem der vorhergehenden Ansprüche, dadurch **gekennzeichnet**, daß die Schicht (20) mit der optischen Struktur auf einem zu sicherenden Produkt (24) angebracht ist, und daß das Sicherungselement (10) in Draufsicht gesehen unterhalb der dielektrischen Schicht (14) eine Klebeschicht (22) enthält, die mit der Schicht (20) mit optischer Struktur verbindbar ist (Figuren 7 und 8).

13. Sicherungselement nach einem der vorhergehenden Ansprüche, dadurch **gekennzeichnet**, daß zwischen dem Trägermaterial (12) und der Schicht (18) aus Prägelack eine transparente Trennschicht (26) angeordnet ist.

14. Sicherungselement nach Anspruch 13, dadurch **gekennzeichnet**, daß die Trennschicht (26) vorzugsweise Wachs oder Silikon enthält.

15. Sicherungselement nach einem der vorhergehenden Ansprüche 13 oder 14, dadurch **gekennzeichnet**, daß das Trägermaterial (12) strahlungsundurchlässig ist und von der Trennschicht (26) lösbar ist.

16. Sicherungselement nach einem der vorhergehenden Ansprüche, dadurch **gekennzeichnet**, daß die Mikrostruktur (16) mittels eines Prägestempels entweder unmittelbar auf das Trägermaterial (12) (Figur 1) oder auf die Schicht (18) aus Prägelack aufgebracht wird, und daß danach die dielektrische Schicht (14) auf die Mikrostruktur (16) aufgebracht, vorzugsweise aufgesputtert oder aufgedampft wird.

17. Sicherungselement nach einem der vorhergehenden Ansprüche 1 bis 15, dadurch **gekennzeichnet**, daß zunächst die dielektrische Schicht (14) auf das Trägermaterial (12) oder auf die Schicht (18) aus Prägelack aufgebracht wird, und daß danach die Mikrostruktur (16) mithilfe eines Prägestempels in die dielektrische Schicht (14) geprägt wird.

18. Sicherungselement nach einem der vorhergehenden Ansprüche, dadurch **gekennzeichnet**, daß die dielektrische Schicht (14) aus mindestens zwei, vorzugsweise drei Teilschichten besteht.

19. Sicherungselement nach einem der vorhergehenden Ansprüche, dadurch **gekennzeichnet**, daß die Schicht Silizium oder Siliziumoxid im Wechsel mit Titanoxid, vorzugsweise die Schichtfolge Si-TiO₂-Si enthält.

20. Sicherungselement nach einem der vorhergehenden Ansprüche, dadurch **gekennzeichnet**, daß die dielektrische Schicht (14) Strahlung im sichtbaren Bereich zu mindestens 50% reflektiert und im Bereich des nahen Infrarot zu höchstens 20% reflektiert.

21. Sicherungselement nach einem der vorhergehenden Ansprüche, dadurch **gekennzeichnet**, daß die dielektrische Schicht (14) Strahlung im sichtbaren Bereich zu höchstens 20% und im Bereich des nahen Infrarot mindestens zu 70% durchläßt.

22. Sicherungselement nach einem der vorhergehenden Ansprüche, dadurch **gekennzeichnet**, daß es unter Anwendung eines Heißsiegelklebeverfahrens mit dem zu sichernden Produkt (24) verklebt ist.

23. Sicherungselement nach einem der vorhergehenden Ansprüche, dadurch **gekennzeichnet**, daß das Sicherungselement (10) in Draufsicht gesehen an seiner Unterseite eine Schicht (22) aus Heißsiegelkleber hat.

24. Sicherungselement nach einem der vorhergehenden Ansprüche, dadurch **gekennzeichnet**, daß die Mikrostruktur (16) eine optische Beugungsstruktur, vorzugsweise eine Hologrammstruktur, definiert.

25. Sicherungselement nach einem der vorhergehenden Ansprüche, dadurch **gekennzeichnet**, daß es als Etikett ausgbildet ist.

26. Sicherungselement nach einem der vorhergehenden Ansprüche, dadurch **gekennzeichnet**, daß die optische Struktur nach dem Verbinden der verschiedenen Schichten des Sicherungselements (10) erzeugt wird, vorzugsweise mittels Strahlung im Infrarotbereich eines Lasers.

27. Produkt, versehen mit einem Sicherungselement (10) nach einem der vorhergehenden Ansprüche.

28. Produkt nach Anspruch 27, dadurch **gekennzeichnet**, daß das Trägermaterial (12) nach dem Aufbringen des Sicherungselements (10) auf das Produkt (24) entfernt wird.

29. Produkt nach Anspruch 27 oder 28, dadurch **gekennzeichnet**, daß es ein Dokument, vorzugsweise eine Kreditkarte, ein Ausweis, eine Identifikationskarte, eine Verpackung oder eine Compact-Disc ist.

30. Folie mit einer Beschichtung für den Schutz von auf einem Informationsträger aufgebrachten, IR-lesbaren Informationen
gekennzeichnet durch folgende Merkmale:
- die Folie besteht aus einer transparenten Trägerbahn (1), die mit einer Beschichtung (2) aus einer oder mehreren definierten Schichten (2.1 - 2.4) eines dielektrischen Materials versehen ist.
- die dielektrische Schicht (2.1) bzw. die Schichten (2.1 - 2.4) sind sowohl hinsichtlich der Materialwahl als auch ihrer Schichtdicke derart aufeinander abgestimmt,
daß ihre Reflexionsfähigkeit im sichtbaren Lichtbereich (VIS) über 70 % und im nahen Infrarotbereich (NIR) unter 20 % liegt, und
daß ihre Lichtdurchlässigkeit (Transmission) im sichtbaren Lichtbereich (VIS) geringer als 20 % und im nahen Infrarotbereich (NIR) größer als 70 % ist.

31. Folie mit einer Beschichtung nach Anspruch 30,
dadurch gekennzeichnet,
daß die einzelnen Schichten (2.1 - 2.4) der Beschichtung (2) aus gleichen oder unterschiedlichen Materialien bestehen.

32. Folie mit einer Beschichtung nach Anspruch 30 oder 31,
dadurch gekennzeichnet,
daß der Auftrag der dielektrischen Schichten (2.1 - 2.4) durch Bedampfung bzw. durch Bedampfung im Vakuum (Sputtern) erfolgt.

33. Folie mit einer Beschichtung nach einem der vorherigen Ansprüche 30 bis 32,
dadurch gekennzeichnet,
daß als Material für die dielektrischen Schichten (2.1 - 2.4) Silizium (Si) oder Titanoxid (TiO2) verwendet wird.

34. Folie mit einer Beschichtung nach einem der Ansprüche 30 bis 33,
dadurch gekennzeichnet,
daß die Schichtdicke des dielektrischen Materials jeder Einzelschicht (2.1 - 2.4) im Bereich zwischen 15 bis 80 nm liegt.

35. Folie mit einer Beschichtung nach einem der Ansprüche 30 bis 34,
dadurch gekennzeichnet,
daß die Gesamtstärke der dielektrischen Beschichtung (2) in einem Bereich zwischen 95 und 160 nm liegt.

36. Folie mit einer Beschichtung nach einem oder mehreren der vorherigen Ansprüche,
dadurch gekennzeichnet,
daß die Rückseite der dielektrischen Beschichtung (2) oder die obere Schicht (2.4) als Informationsträger ausgebildet ist.

37. Folie mit einer Beschichtung nach einem oder mehreren der vorherigen Ansprüche,
dadurch gekennzeichnet,
daß zwischen der Trägerbahn (1) und der dielektrischen Schicht (2) ein heißsiegelfähiger Auftrag in Form einer transparenten Lacktrennschicht (4) angeordnet ist.

38. Folie mit einer Beschichtung nach einem oder mehreren der vorherigen Ansprüche,
dadurch gekennzeichnet,
daß sowohl die Trägerbahn (1) als auch die heißsiegelfähige Lacktrennschicht (4) zur Aufnahme von holografischen oder anderen beugungswirksamen Strukturen ist.
